# FASCICULE DE BREVET EUROPEEN

(11) **EP 0 392 881 B1**
(45) Date de publication et mention de la délivrance du brevet: **05.01.1994**
(21) Numéro de dépôt: 90400261.5
(22) Date de dépôt: 31.01.1990
(51) Int. Cl.: G01N 29/04

(54) **Tête de contrôle par ultrasons et son application au contrôle de pièces dont le galbe evolue en cours de fabrication**
Ultraschallüberwachungsfühler sowie dessen Anwendung zur Überwachung von Werkstücken, deren Konturen sich während der Fabrikation verändern
Ultrasonic test head and its application for controlling changing shapes of a work piece during its manufacture

(30) Priorité: 02.02.1989 FR 8901344; 30.05.1989 FR 8907110
(43) Date de publication de la demande: 17.10.1990
(73) Titulaire: AEROSPATIALE Société Nationale Industrielle, 75781 Paris Cédex 16 (FR)
(72) Inventeur: Floret, Michel, F-92230 Gennevilliers (FR)
(74) Mandataire: Mongrédien, André

(56) Documents cités:
- DE-A- 2 926 182
- FR-A- 958 531
- GB-A- 2 099 661
- PATENT ABSTRACTS OF JAPAN, vol. 8, no. 86 (P-269)[1523], 19 avril 1984, page 142 P 269; & JP-A-59 3256
- PATENT ABSTRACTS OF JAPAN, vol. 10, no. 288 (P-502)[2344], 30 septembre 1986; & JP-A-61 107154

## Description

L'invention concerne une tête de contrôle équipée de sondes ultrasonores fonctionnant par réflection et permettant de contrôler des pièces présentant un galbe quelconque, généralement non uniforme, telles que des panneaux en matériau composite.

L'invention concerne également l'application d'une telle tête de contrôle à la réalisation de plusieurs contrôles successifs sur des pièces dont le galbe évolue en cours de fabrication, en des points bien définis de ces pièces.

L'utilisation de pièces en matériau composite s'est considérablement développée ces dernières années, notamment dans les industries aéronautique, spatiale, automobile, maritime et ferroviaire. Ce développement s'explique principalement par l'allègement considérable des structures qu'il autorise et par la possibilité offerte par ces matériaux d'obtenir par moulage des formes complexes.

Il est rappelé que les pièces en matériau composite sont le plus souvent fabriquées par drapage à plat de plusieurs nappes ou couches superposées, formées chacune de fibres imprégnées de résine. Selon l'application envisagée, les fibres peuvent être indifféremment en carbone, en verre, en Kevlar, etc.. La résine constituant la matrice du matériau composite est généralement une résine thermodurcissable qui polymérise avec la température. Cette polymérisation peut notamment être obtenue au cours d'une étape ultérieure de moulage, au cours de laquelle on donne à la pièce son galbe définitif.

Malgré les avantages précités, les pièces fabriquées en matériau composite peuvent présenter certains défauts résultant de la structure particulière de ces matériaux. Ces défauts ont pour origine des manques de cohésion entre les fibres conduisant à la présence de poches d'air ou de gaz plus ou moins étendues. Ils se traduisent sur les pièces finies soit par une certaine porosité de ces pièces lorsque les poches sont de petites dimensions et réparties dans tout le volume, soit par un phénomène appelé délaminage lorsque des poches d'air de plus grandes dimensions sont formées entre les couches adjacentes du matériau.

La détection de ces défauts sur les pièces finies est une opération nécessaire à l'homologation de ces pièces.

Par ailleurs, il est souhaitable de pouvoir surveiller, en cours de fabrication, l'évolution des défauts et de l'épaisseur de la pièce au fur et à mesure que son galbe varie. En effet, cette surveillance peut permettre d'optimiser la conception de la structure de départ de la pièce drapée à plat.

Pour effectuer le contrôle non destructif des pièces en matériau composite, des techniques originales ont du être développées, car les techniques de contrôle classiques des pièces métalliques telles que les techniques par courants de Foucault n'étaient pas applicables à de telles pièces. Ces techniques de contrôle des pièces en matériau composite reposent sur l'utilisation de sondes ou transducteurs ultrasonores fonctionnant habituellement a une fréquence comprise entre 0,5 et 15 MHz.

En particulier, dans le cas du contrôle de pièces de formes compliquées, on utilise une méthode par réflexion dans laquelle le transducteur ultrasonore est utilisé à la fois comme émetteur et comme récepteur. Le transducteur étant placé en face de la surface de la pièce, il reçoit en retour les échos renvoyés par cette surface et par la surface opposée de la pièce, ainsi que les échos résultant d'un éventuel délaminage. Il est ainsi possible de contrôler ponctuellement l'épaisseur de la pièce et de détecter la présence de défauts de délaminage ainsi que la position et l'ampleur de ces défauts. En outre, la mesure de l'atténuation de l'écho renvoyé par la surface opposée de la pièce, correspondant à des ondes ultrasonores ayant traversé deux fois l'épaisseur de cette dernière, permet de connaître la porosité de la structure.

Comme toutes les techniques de contrôle par ultrasons, cette méthode par réflexion a pour inconvénient d'être une méthode ponctuelle, de sorte que le contrôle d'une grande surface à l'aide d'un transducteur unique est une opération longue et fastidieuse. Si l'on peut envisager, afin de réduire le temps de contrôle, de grouper plusieurs transducteurs lorsqu'on contrôle une pièce plane ou de courbure uniforme, cela n'a jusqu'à présent pas été possible lorsqu'il s'agit de contrôler des pièces présentant un galbe non uniforme, comme c'est fréquemment le cas des pièces en matériau composite qui ont précisément pour avantage de rendre possible la fabrication de telles pièces.

En effet, la technique de contrôle par réflexion impose un positionnement relativement précis des transducteurs perpendiculairement à la surface de la pièce, afin que les échos renvoyés par cette dernière soient bien reçus par le transducteur. Si cette exigence peut être satisfaite relativement facilement pour un transducteur unique ou pour un groupe de transducteurs placés en vis-à-vis d'une surface plane ou de courbure uniforme, elle constitue un problème qui n'a jamais pu être surmonté jusqu'à présent lorsqu'on envisage de regrouper plusieurs transducteurs pour contrôler des pièces présentant un galbe non uniforme.

Une difficulté encore plus grande a également empêché jusqu'à présent de pouvoir contrôler à l'aide d'une même tête de contrôle comprenant plusieurs transducteurs une pièce dont le galbe évolue au cours de sa fabrication. En effet, à la nécessité de s'adapter à l'évolution du galbe de la pièce s'ajoute dans ce cas la difficulté d'effectuer des contrôles en des points qui restent inchangés, alors que le galbe est modifié.

Cette difficulté est notamment illustrée par le document DE-A-2 926 182, dans lequel un transducteur ultrasonore comporte plusieurs pastilles piézoélectriques placées entre une structure d'amortissement et une structure d'adaptation. L'ensemble a la forme d'une barrette déformable, réalisée en un matériau élastique.

L'invention a précisément pour objet une tête de contrôle de conception originale regroupant plusieurs transducteurs ultrasonores de façon telle que chacun de ces transducteurs reste approximativement perpendiculaire à la surface de la pièce à contrôler et contrôlent des points dont l'écartement reste invariable, quel que soit le galbe de cette surface et l'évolution de ce galbe dans le temps et dans l'espace.

Selon l'invention, ce premier objectif est atteint au moyen d'une tête de contrôle par ultrasons de pièces de galbe quelconque, conforme à la revendication 1.

De préférence, afin d'éviter de devoir changer toute la barrette si l'un des transducteurs ne fonctionne plus correctement ainsi que lorsque le nombre et/ou les caractéristiques des transducteurs doivent être modifiés, chacun des transducteurs est monté de façon amovible sur la barrette par des moyens de fixation démontables.

Avantageusement, ces moyens de fixation démontables comprennent des organes de clavetage tels que des vis, traversant la barrette et dont les extrémités pénètrent dans des trous formés dans les faces latérales d'un boîtier d'enrobage de chacun des transducteurs.

En plus de ces organes de clavetage, les moyens de fixation comprennent de préférence, pour chacun des transducteurs, un organe de liaison tel qu'un fil métallique reliant les extrémités des deux parties de chaque dent de la barrette entre lesquelles est logé le transducteur.

Afin que chacun des transducteurs puisse être parfaitement repéré géométriquement par rapport à un référentiel lié à un porteur supportant la tête de contrôle, cette dernière comprend de plus un ensemble rotulant supportant la barrette déformable et définissant deux axes d'articulation dont un point d'intersection est situé sur un axe d'un transducteur central, à proximité de la surface de la pièce sur laquelle les patins sont en appui.

Selon la nature de la pièce à contrôler, les transducteurs portés par la barrette peuvent être identiques ou non. Dans les deux cas, ils sont avantageusement reliés à des moyens de multiplexage qui permettent de contrôler successivement chacune des zones de la pièce situées en vis-à-vis de chacun des transducteurs. En utilisant des transducteurs montés dans la barrette de façon à émettre des faisceaux ultrasonores tangents les uns aux autres, on peut ainsi contrôler par balayage une pièce de grande dimension et de galbe variable en un temps très réduit par rapport au contrôle de telles pièces à l'aide d'un transducteur unique.

L'invention concerne également une application de cette tête de contrôle à la réalisation de plusieurs contrôles successifs sur des pièces dont le galbe évolue en cours de fabrication, à partir d'un état initial approximativement plan. Selon cette application, il est proposé un procédé qui consiste à :
- tracer sur la pièce, lorsqu'elle est dans son état initial, des points à contrôler répartis selon un maillage prédéterminé ; et
- contrôler la pièce dans son état initial, puis au moins une autre fois en cours de fabrication, au moyen d'une tête de contrôle ultrasonore unique conforme à l'invention, en alignant les axes des transducteurs de la tête de contrôle avec les points à contrôler.

Un mode de réalisation préféré de l'invention va à présent être décrit, à titre d'exemple non limitatif, en se référant aux dessins annexés dans lesquels :
- la figure 1 est une vue en perspective représentant une tête de contrôle par ultrasons conforme à l'invention, cette vue étant prise par en dessous, c'est-à-dire du côté de la tête tournée vers la pièce à contrôler ;
- la figure 2 est une vue en perspective de la tête de contrôle de la figure 1, prise par le dessus ;
- la figure 3 est une vue en perspective représentant la barrette déformable en forme de peigne dans laquelle sont normalement logés les transducteurs ultrasonores de la tête de contrôle des figures 1 et 2 ;
- la figure 4 est une vue de côté illustrant schématiquement l'utilisation de la tête de contrôle selon l'invention pour contrôler un panneau en matériau composite présentant un galbe non uniforme ;
- les figures 5A et 5B sont des vues en perspective illustrant schématiquement la réalisation de contrôles successifs d'un panneau en matériau composite, respectivement dans son état plan initial puis à un autre stade de sa fabrication, alors qu'il présente un galbe différent, à l'aide de la tête de contrôle de la figure 1 ; et
- la figure 6 est une vue en perspective éclatée représentant la partie centrale d'une barrette déformable dans laquelle les transducteurs sont montés de façon amovible.

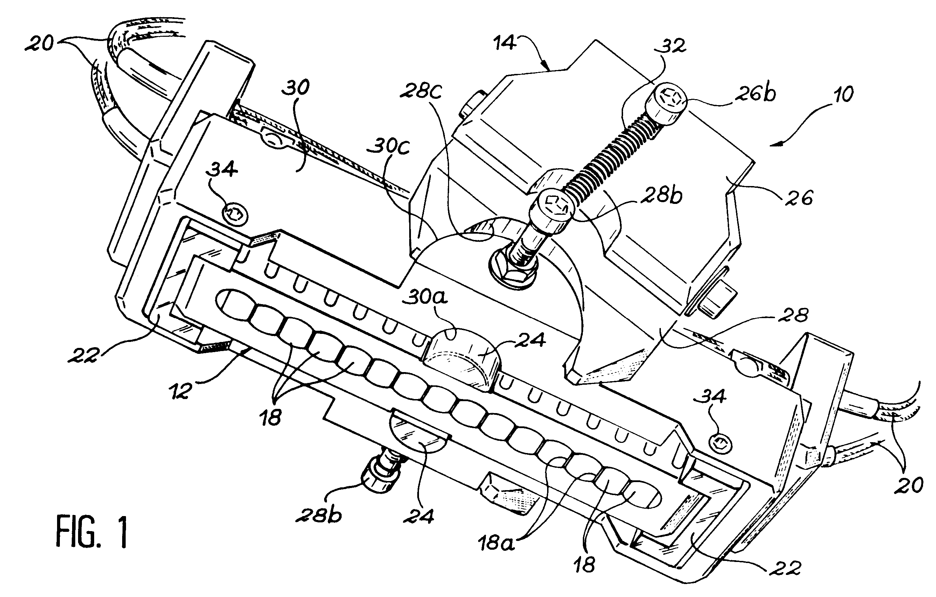

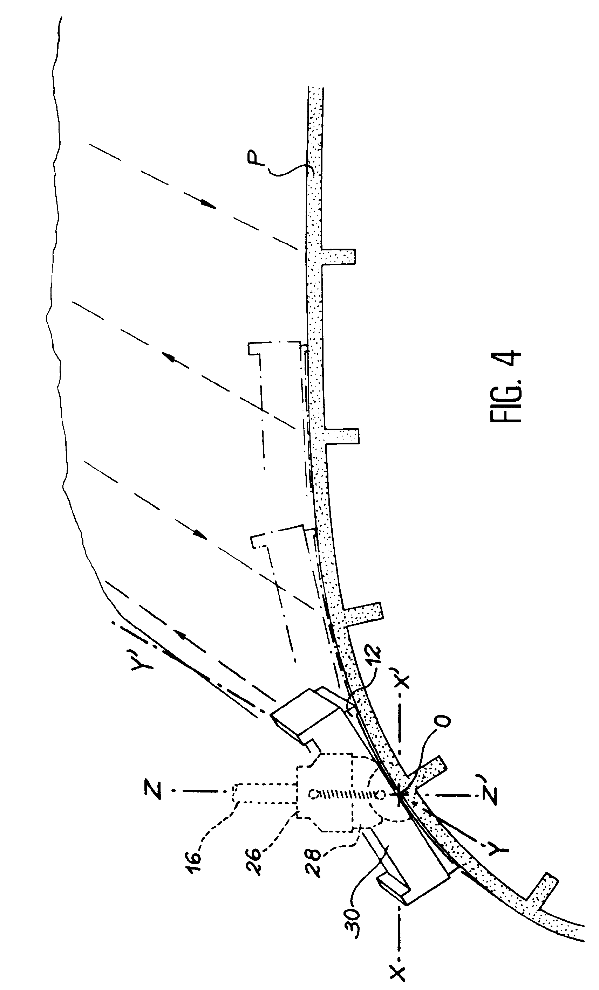

Sur les figures 1 à 5, la tête de contrôle selon l'invention est désignée de façon générale par la référence 10. Cette tête de contrôle 10 comprend essentiellement une barrette déformable 12 et un ensemble rotulant 14 supportant la barrette 12 et permettant son montage sur un porteur dont l'extrémité est représentée en 16 sur la figure 4.

La barrette déformable 12, dont la structure sera décrite plus en détail par la suite, supporte une série de transducteurs ultrasonores 18 alignés selon une direction coïncidant avec la longueur de la barrette. Chacun de ces transducteurs 18 permet d'effectuer indépendamment des autres une mesure par réflexion, au moyen d'un circuit électronique classique (non représenté) qui ne fait pas partie de l'invention, par l'intermédiaire d'un système de multiplexage (non représenté) permettant à chacun des transducteurs d'effectuer à tour de rôle le contrôle de la zone de la pièce située en vis-à-vis de ce transducteur.

La structure des transducteurs 18 ne fait pas partie de l'invention. On rappellera cependant que chacun des transducteurs comprend une pastille piézoélectrique émettrice d'ultrasons, derrière laquelle est placé un élément amortisseur et devant laquelle est placé un relais. Un transducteur ultrasonore ainsi constitué présente généralement une configuration cylindrique et son axe doit être orienté approximativement perpendiculairement à la surface de la pièce à contrôler afin que l'écho des ultrasons émis par la pastille piézoélectrique et réfléchi par la pièce revienne sur ce transducteur.

De préférence, afin que l'alignement de transducteurs 18 montés dans la barrette 12 permette d'effectuer un balayage de la totalité de la zone située en regard de cette barrette, ces transducteurs sont montés dans cette dernière de façon à émettre des faisceaux ultrasonores tangents les uns aux autres. A cet effet et comme l'illustre la figure 1, des faces latérales 18a planes et parallèles entre elles sont usinées sur chacun des transducteurs et ces derniers sont montés dans la barrette 12 de telle sorte que les extrémités des transducteurs tournées vers la pièce à contrôler soient pratiquement en contact les unes des autres par ces faces 18a.

Il est à noter que les transducteurs 18 peuvent présenter, selon le type de contrôle à réaliser, des caractéristiques identiques ou au contraire différentes d'un transducteur à l'autre.

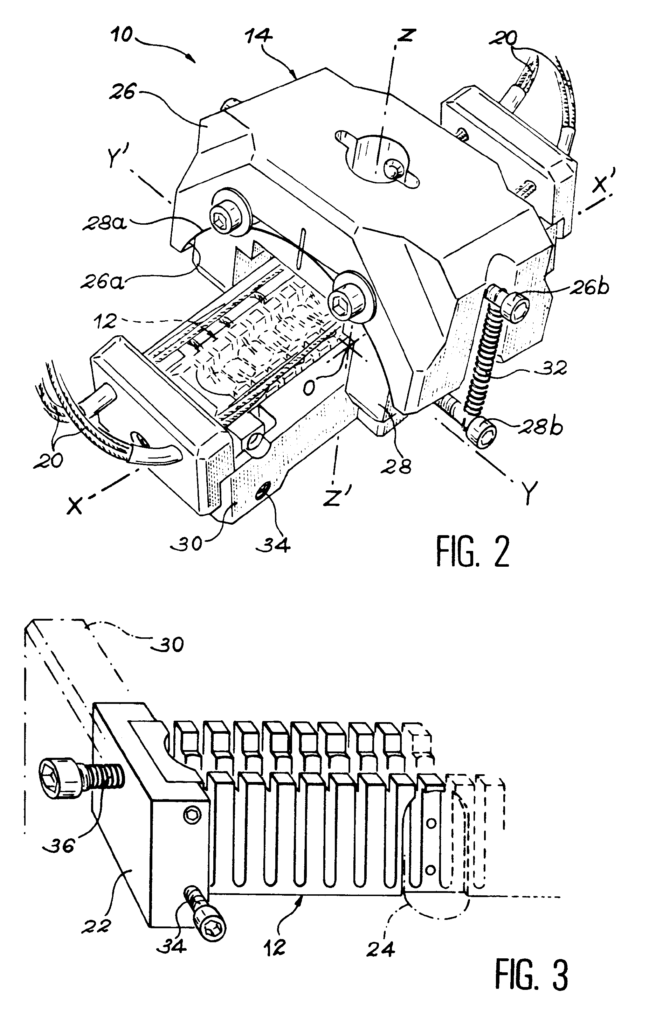

Comme l'illustre mieux la figure 3, la barrette 12 supportant les transducteurs 18 présente approximativement la forme d'un peigne qui est réalisé en un matériau élastique. La face inférieure de la barrette tournée vers la pièce à contrôler, sur laquelle affleurent les faces extrémités de chacun des transducteurs 18, présente au repos une cambrure ou courbure déterminée, par exemple de rayon infini (c'est-à-dire plane). Cette face inférieure est formée sur la branche de liaison du peigne formé par la barrette, alors que les dents de ce peigne, qui font saillie vers l'arrière à partir de la branche de liaison, supportent chacune l'un des transducteurs 18. Cette configuration autorise une déformation élastique de la barrette hors de sa position de repos précitée, ayant pour effet de donner à la face inférieure de la barrette une courbure variable qui peut s'adapter à la courbure de la pièce à contrôler comme on le verra ultérieurement. Cette déformation peut se faire dans une gamme de courbures déterminées, par exemple entre une courbure au repos de rayon infini et une courbure de déformation maximale de rayon voisin de 300 mm, dans le sens concave.

Dans la pratique, le matériau constituant le peigne 12 est choisi afin de donner à la barrette l'élasticité souhaitée tout en assurant un maintien efficace des transducteurs par collage et une étanchéité satisfaisante des connexions électriques entre ces derniers et les fils de raccordement électriques 20 (figure 2) par lesquels les transducteurs sont raccordés au circuit électronique associé. Avantageusement, on utilisera à cet effet une matière plastique, par exemple à base de silicone.

Comme l'illustre notamment la figure 1, la barrette déformable 12 est équipée de patins de contact 22 et 24 répartis sur la longueur de cette dernière. Ces patins 22, 24 sont aptes à venir en appui sur la surface de la pièce à contrôler, de façon à donner à la barrette une courbure comparable à la courbure de cette surface, quelle que soit cette courbure à l'intérieur de la gamme de courbures acceptables pour la barrette.

Dans l'exemple de réalisation illustré sur les figures, ces patins de contact comprennent deux patins d'extrémité 22 en forme de U qui sont montés par emboîtement sur chacune des extrémités de la barrette 12. De plus, deux patins latéraux 24 à section en forme de secteur circulaire sont montés au centre de chacun des côtés de la barrette 12, avec leurs faces cylindriques tournées vers l'extérieur et dont les axes sont orientés perpendiculairement à la face inférieure de la barrette. Les patins 22 et 24 sont montés de façon interchangeable sur la barrette 12 et ils font saillie au-delà de la face inférieure de cette dernière sur une même distance. Cette distance, limitée à quelques millimètres, est réglable.

Etant donné que les patins de contact 22 et 24 sont répartis sur la longueur de la barrette 12, lorsque ces patins sont tous en appui sur la surface de la pièce à contrôler, cela signifie que la courbure de la face inférieure de la barrette est approximativement la même que la courbure de la zone de la pièce qui se trouve en face de la tête de contrôle. On est alors pratiquement assuré que l'axe de chacun des transducteurs 18 est approximativement perpendiculaire à la surface de la pièce qui se trouve en face de ce transducteur et que la distance entre l'extrémité de chacun des transducteurs et la surface en vis-à-vis est pratiquement la même pour chacun des transducteurs. Ainsi, les conditions de fonctionnement de chacun des transducteurs 18 sont identiques d'une extrémité à l'autre de la barrette, même si la courbure de la pièce varie. Par conséquent, la tête de contrôle selon l'invention permet d'effectuer des mesures dans des conditions pratiquement uniformes pour chacun des transducteurs et sur toute la surface de la pièce.

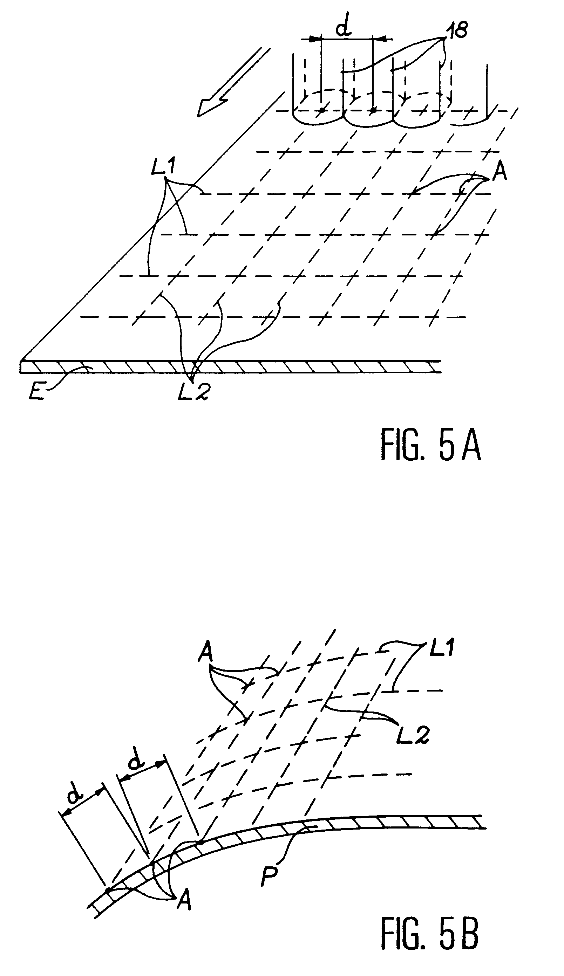

De plus, l'extrémité des transducteurs est suffisamment proche de la surface de la pièce pour que les distances séparant les points d'intersection des axes des transducteurs avec la surface de la pièce puissent être considérées comme approximativement constantes ou invariables, quel que soit le galbe de la pièce. Cette propriété est particulièrement utile dans l'application de l'invention qui sera décrite ultérieurement en se référant aux figures 5A et 5B.

Comme l'illustrent bien les figures 1, 2 et 4 l'ensemble rotulant 14 par lequel la barrette 12 est montée à l'extrémité du porteur 16 comprend un support 26 prévu pour être monté à l'extrémité du porteur 16, une pièce intermédiaire 28 et un cadre 30.

Le support 26 coopère avec la pièce intermédiaire 28 par deux surfaces de révolution 26a et 28a (figure 2) respectivement concave et convexe donnant à la pièce intermédiaire 28 un degré de liberté de rotation par rapport au support 26 autour d'un axe d'articulation XX' perpendiculaire à l'axe ZZ', généralement vertical, de l'extrémité du porteur 16. Il est à noter que cet axe de rotation XX' est contenu dans un plan passant par les axes de chacun des transducteurs 18 et par l'axe ZZ'.

Sur chacun des côtés du support 26 et de la pièce intermédiaire 28 font saillie, perpendiculairement aux axes XX' et ZZ', des plots d'ancrage 26b, 28b sur lesquels sont accrochés deux ressorts de rappel 32 qui ont pour effet de maintenir normalement la pièce intermédiaire 28 dans une position centrale de repos illustrée sur la figure 2.

La pièce intermédiaire 28 chevauche le cadre 30 et coopère avec ce dernier, de part et d'autre du cadre, par des surfaces de révolution complémentaires 28c et 30c, respectivement concaves et convexes. es surfaces de révolution 28c et 30c définissent un deuxième axe d'articulation YY' orthogonal à l'axe XX' et apparaîssant sur la figure 2.

Selon un aspect particulièrement intéressant du mode de réalisation décrit, les axes XX', YY' et ZZ' se coupent en un même point 0 qui est situé à proximité de la surface de la pièce sur laquelle les patins 22 et 24 sont en appui (figure 4). Plus précisément, ce point 0 est situé au milieu d'un segment formé par les intersections de l'axe du transducteur central avec la surface de la pièce sur laquelle les patins 22 et 24 sont en appui, respectivement lorsque la barrette présente sa courbure de repos et lorsque la barrette présente sa courbure de déformation maximale.

Ainsi, et uniquement à titre d'exemple, si la courbure au repos de la barrette correspond à un rayon infini, si la courbure de déformation maximale correspond à un rayon d'environ 300 mm et si on utilise une tête de contrôle comportant quinze capteurs dont l'entraxe est d'environ 6,8 mm, l'écart maximal entre le point d'intersection des axes XX' et YY' est au plus égal à environ 2 mm par rapport à la surface de la pièce.

Cette caractéristique permet de connaître avec une grande précision et indépendamment de la courbure particulière de la zone contrôlée les coordonnées des différents points de la surface en cours de contrôle, sans qu'il soit nécessaire d'adjoindre à la tête de contrôle un ensemble de calcul de coordonnées complexe.

La barrette 12 est elle-même montée dans le cadre 30 par deux axes 34 perpendiculaire aux axes XX' et ZZ' et traversant les extrémités de la barrette à proximité immédiate de la face inférieure de cette dernière. Dans sa partie centrale, le cadre 30 comporte des rainures intérieures 30a (figure 1), à section en arc de cercle, qui sont orientées selon une direction perpendiculaire aux axes 34 et à la face inférieure de la barrette, et dans lesquels coulissent les patins latéraux 24 lorsque la barrette se déforme.

De préférence et comme l'illustre la figure 3, afin de garantir le retour de la barrette 12 dans sa position de repos en dépit de l'hystérésis pouvant exister dans le matériau qui la constitue, des ressorts de rappel 36 sont interposés entre le cadre 30 et chacune des extrémités de la barrette 12, dans un plan décalé vers l'arrière par rapport à la surface inférieure de cette dernière.

Comme l'illustre très schématiquement la figure 4, la tête de contrôle 10 selon l'invention permet de contrôler par des balayages successifs un panneau P en matériau composite, tel qu'un élément de voilure d'aéronef dont la courbure varie progressivement, en permettant un gain de temps considérable par rapport aux techniques de contrôle classiques.

Pour que le contrôle par ultrasons puisse être réalisé, il est rappelé qu'un liquide de couplage tel que de l'eau doit être présent entre chacun des transducteurs et la surface de la pièce à contrôler. A cet effet, celle-ci est avantageusement placée en piscine. En variante, un système d'injection du liquide de couplage peut toutefois être adjoint à la tête de contrôle.

Pour réaliser le contrôle proprement dit, on peut avantageusement déplacer la tête de contrôle selon la direction YY', après avoir empêché tout déplacement dans le sens XX'. On amène alors chacun des patins portés par la barrette 12 au contact de la surface du panneau à contrôler, à une extrémité de celui-ci en descendant la tête de contrôle selon la direction ZZ' à l'aide du porteur 16. Lorsque ce contact est établi, cela signifie comme on l'a vu précédemment que chacun des transducteurs 18 est positionné de façon satisfaisante par rapport à la surface du panneau.

Le contrôle proprement dit, qui peut être un simple contrôle d'épaisseur, un contrôle de qualité ou ces deux contrôles réunis peut alors être effectué sur toute la largeur de la bande balayée par la tête de contrôle, en déplaçant celle-ci progressivement selon la direction YY' jusqu'à l'autre extrémité du panneau. Au cours de ce déplacement, une légère précontrainte appliquée par le porteur sur la tête 10 garantit l'application permanente des patins sur la surface du panneau et, par conséquent l'exactitude du contrôle.

Lorsqu'une première bande du panneau a ainsi été contrôlée, on déplace la tête de contrôle selon la direction XX' d'une distance égale à la largeur de la bande balayée par la tête. Une deuxième bande du panneau peut ainsi être contrôlée de la même manière que précédemment. On répète l'opération jusqu'à avoir complètement balayé le panneau à contrôler.

Dans la pratique, l'opération qui vient d'être expliquée brièvement peut être réalisée de façon très simple en montant le porteur 16 sur un portique apte à se déplacer sur des rails sur toute la longueur du panneau, par l'intermédiaire d'un chariot pouvant occuper différentes positions prédéterminées sur le portique, et en équipant le porteur 16 d'un dispositif tel qu'un vérin appliquant sur la tête de contrôle 10 un effort modéré vers le bas.

Les figures 5A et 5B illustrent de façon très schématique une application particulièrement avantageuse de la tête de contrôle selon l'invention à la réalisation de plusieurs contrôles successifs sur une pièce en matériau composite en cours de fabrication.

Lors de la fabrication de certaines pièces en matériau composite, on réalise par drapage une ébauche approximativement plane, avant de donner à la pièce sa forme définitive, par exemple par moulage. En utilisant la tête de contrôle décrite précédemment, à différents moments au cours de la fabrication de la pièce, on peut observer à la fois l'évolution de l'épaisseur de la pièce et l'évolution des défauts qu'elle contient, en des points précis et qui restent les mêmes quel que soit le galbe de la pièce.

A cet effet, comme l'illustre la figure 5A, lorsque l'ébauche de pièce E approximativement plane a été réalisée, on trace sur la surface de cette ébauche un maillage formé par deux séries de lignes parallèles L1 et L2, orthogonales entre elles, qui se coupent en des points A. Ces points A déterminent les points sur lesquels un contrôle doit être effectué. L'écartement entre les lignes L2 voisines de l'une des séries de lignes est choisi égal à la distance d séparant les axes des transducteurs 18 voisins de la tête de contrôle, lorsque ces axes sont parallèles.

Il est à noter que cette distance d est une distance dont la mesure est faite selon une droite lorsque la barrette est appliquée sur une surface plane et selon une courbe correspondant au galbe de la surface (lorsque la barrette est appliquée sur une surface galbée). Cette "distance curviligne" est cependant pratiquement égale à une distance linéaire, en première approximation.

Lorsque ce traçage est terminé, on effectue un premier contrôle au moyen de la tête de contrôle décrite précédemment en se référant aux figures 1 à 3. A cet effet, on amène les patins 22 et 24 au contact de la pièce et on positionne la tête afin que les axes de chacun des transducteurs 18 coupent l'une des lignes L2. En déplaçant la tête parallèlement à ces lignes L2, on amène les axes des transducteurs successivement au-dessus de chacun des alignements de points A à contrôler placés sur les lignes L2, en effectuant à chaque fois l'ensemble des mesures permises par les transducteurs.

La fabrication de la pièce P se poursuit ensuite, à partir de l'ébauche E, de la manière habituelle, pour lui donner en une ou plusieurs opérations la forme désirée. Comme l'illustre la figure 5B, la tête de contrôle selon l'invention permet, à la fin de chaque opération, de renouveler les mesures précédentes, pratiquement aux mêmes endroits, c'est-à-dire à l'emplacement des points A. En effet, comme on l'a décrit précédemment, l'agencement des transducteurs 18 sur la tête de contrôle permet de maintenir approximativement constante les distances d qui séparent les intersections des axes des transducteurs adjacents avec la surface de la pièce, indépendamment du galbe qui est donné à cette surface.

La possibilité ainsi offerte par l'invention de réaliser, en des points bien déterminés de la pièce, plusieurs contrôles successifs à différents stades de la fabrication d'une pièce en matériau composite, est particulièrement intéressante. Les évolutions des défauts et de l'épaisseur au cours de la fabrication peuvent en effet faire apparaître certains défauts de conception de la structure de départ constituée par l'ébauche E. L'observation de ces évolutions permet donc d'optimiser la conception de cette structure de départ et, par conséquent, d'améliorer la pièce obtenue.

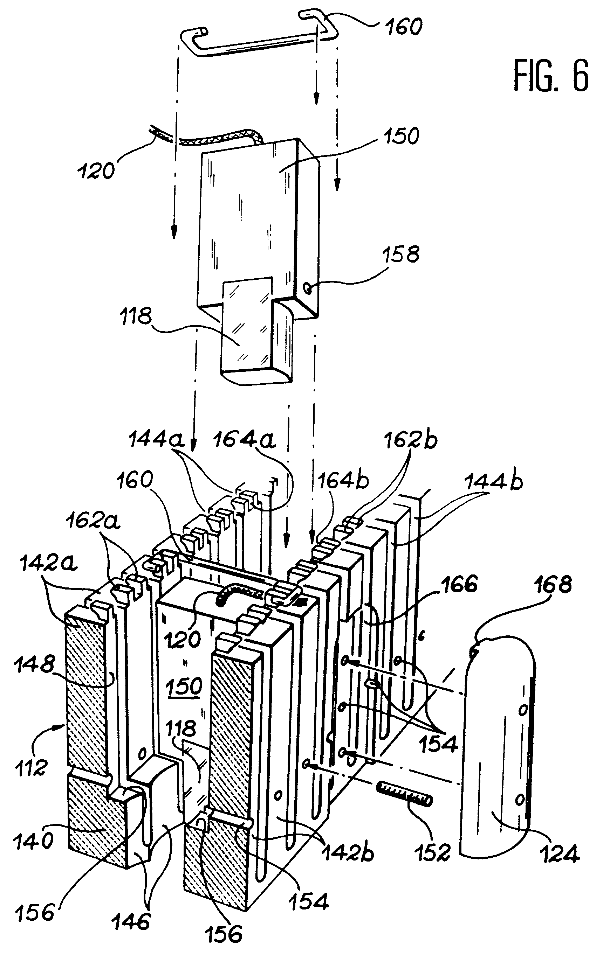

La figure 6 illustre une variante de réalisation de la barrette, dans laquelle chacun des transducteurs est monté de façon amovible.

Ainsi, sur la figure 6, la référence 112 désigne de façon générale la partie centrale d'une barrette déformable réalisée en un matériau souple. Cette barrette 112 est prévue pour être montée sur un ensemble rotulant (non représenté), analogue à celui qui a été décrit précédemment en se référant aux figures 1 et 2.

La barrette déformable 112 a approximativement la forme d'un peigne dont la face inférieure, tournée vers la pièce à contrôler, est formée sur une branche de liaison 140 de la barrette. Cette branche de liaison 140 porte des dents formées de deux bras 142a et 142b, orientés perpendiculairement à la branche de liaison et séparés par des fentes 144a et 144b, respectivement.

La branche de liaison 140 présente une ouverture centrale, approximativement rectangulaire, dont deux côtés orientés selon la longueur de la barrette sont formés par la juxtaposition de surfaces 146 présentant en section, parallèlement à la face inférieure de la branche de liaison, la forme d'arcs de cercle. Chacune de ces surfaces 146 correspond à l'une des dents de la barrette.

Les deux bras 142a et 142b des dents du peigne formé par la barrette 112 présentent des faces intérieures planes et parallèles 148 dont l'écartement est supérieur à celui qui sépare les surfaces en arc de cercle 146. Un épaulement 156 parallèle à la face inférieure de la barrette relie les surfaces 146 aux faces 148.

Comme dans le mode de réalisation décrit précédemment, plusieurs transducteurs 118 sont montés côte à côte dans la barrette 112. Plus précisément, un transducteur 118 est monté entre les deux bras 142a, 142b de chacune des dents, son extrémité étant reçue dans l'ouverture centrale de la branche de liaison 140, de telle sorte que sa face d'extrémité affleure la face inférieure de cette branche.

Chacun des transducteurs 118 a la forme d'un cylindre d'axe perpendiculaire à la face inférieure de la branche de liaison 140 et sur lequel sont usinées des faces parallèles opposées par lesquelles les transducteurs sont juxtaposés. En outre, chaque transducteur 118 est monté dans un boîtier d'enrobage étanche 150, réalisé par exemple en résine, à l'exception de son extrémité tournée vers la pièce à contrôler, qui est reçue entre les surfaces en arc de cercle 146 formées dans la branche de liaison 140. Le boîtier d'enrobage étanche 150 est de forme parallélépipédique et il est reçu entre les faces planes en vis-à-vis 148 des bras 142a et 142b des dents.

Afin de permettre le remplacement éventuel de l'ensemble formé par chaque transducteur 118 et par son boîtier d'enrobage 150, chacun de ces ensembles est monté de façon amovible dans la barrette 112, par l'intermédiaire de moyens de fixation démontables.

Dans le mode de réalisation représenté sur la figure 6, ces moyens de fixation démontables comprennent des vis 152 qui sont vissées dans des trous taraudés 154 traversant chacune des parties 142, immédiatement au-dessus des épaulements 156 séparant les faces 148 des surfaces 146. Les extrémités de ces vis 152 pénètrent dans des trous 158 formés sur chacune des faces latérales des boîtiers d'enrobage 150.

Avantageusement, les moyens de fixation démontables comprennent de plus des organes de liaison constitués par des pinces 160 en fil métallique, qui relient les deux bras 142a et 142b de chacune des dents à leurs extrémités opposées à la branche de liaison 140. Chaque pince 160 a approximativement la forme d'un C dont les extrémités sont accrochées sur des parties 162a et 162b en forme de crochets constituant l'extrémité de chacun des bras 142a et 142b.

Chacune des parties 162a, 162b en forme de crochets présente une encoche 164a, 164b dans laquelle peut passer un conducteur électrique 120 sortant par la face arrière de chacun des boîtiers d'enrobage 150.

Lorsqu'un transducteur 118 est mis en place, il est d'abord positionné et immobilisé à proximité de la face inférieure de la barrette par les vis 152. La pince 160 correspondante est ensuite mise en place, ce qui a pour effet de plaquer les bras 142a et 142b contre les faces latérales du boîtier d'enrobage 150 du transducteur, et de maintenir le conducteur électrique 120.

Grâce à l'agencement qui vient d'être décrit, il est possible de remplacer un transducteur défectueux sans avoir à remplacer l'ensemble de la barrette.

De plus, il est possible de réaliser des contrôles différents à l'aide d'une même barrette, en remplaçant un ou plusieurs des transducteurs par des transducteurs ayant des caractéristiques différentes, ou même par des faux transducteurs n'ayant aucune fonction de contrôle.

A l'inverse, cet agencement permet de récupérer les transducteurs lorsque la barrette est endommagée et doit être remplacée.

On réalise ainsi une tête de contrôle dont les éléments sont consommables et interchangeables.

Comme l'illustre la figure 6, chacun des patins de contact 124 montés de part et d'autre de la barrette 112, au centre de celle-ci, est fixé dans un renfoncement 166 chevauchant trois dents adjacentes du peigne, par exemple au moyen de deux vis (non représentées) vissées dans la dent centrale. Afin d'éviter que cette fixation n'ait pour effet d'empêcher toute déformation relative entre ces trois dents, la face de chacun des patins 124 tournée vers la barrette comporte une partie en surplomb 168 qui est en contact avec le fond du renfoncement 166 seulement dans la partie de ce dernier formée sur la dent centrale.

Bien entendu, l'invention n'est pas limitée aux modes de réalisation qui viennent d'être décrits à titre d'exemples, mais en couvre toutes les variantes.

Ainsi, on comprend aisément qu'une tête de contrôle conforme à l'invention peut être utilisée pour contrôler indifféremment des pièces de forme convexe ou concave ou encore des pièces dont la forme évolue entre une forme plane, une forme légèrement convexe et une forme légèrement concave. Dans certains cas particuliers et notamment lorsque la tête de contrôle selon l'invention est utilisée pour contrôler l'intérieur d'une cornière, la barrette portant les transducteurs peut n'être qu'en partie déformable, dans la ou les zones dans lesquelles la courbure de la pièce varie. D'autre part, les transducteurs équipant une même barrette peuvent être de nature différente et les distances séparant les axes de ces transducteurs peuvent également être différentes. Enfin, lorsque les transducteurs sont interchangeables, les vis qui en assurent le blocage peuvent être remplacées par des moyens de clavetage équivalents.

## Revendications

1. Tête de contrôle par ultrasons de pièces de galbe quelconque, comprenant une barrette déformable (12) réalisée en un matériau élastique et supportant une série de transducteurs ultrasonores (18) d'axes coplanaires et fonctionnant par réflexion, caractérisé par le fait que des patins de contact (22,24) répartis le long de la barrette sont aptes à être amenés simultanément en appui sur une surface de la pièce à contrôler, de telle sorte que les axes de tous les transducteurs soient approximativement perpendiculaires à cette surface et coupent cette dernière en des points séparés par des distances approximativement constantes, indépendamment du galbe de la pièce, et par le fait que la barrette déformable (12) a approximativement la forme d'un peigne comportant une branche de liaison de courbure variable, apte à être tournée vers la pièce, et des dents restant approximativement perpendiculaires à la branche de liaison et dans lesquelles sont logés chacun des transducteurs (18).

2. Tête de contrôle selon revendication 1, caractérisée par le fait qu'elle comprend des moyens de rappel (36) de la barrette déformable (12) vers sa position de repos.

3. Tête de contrôle selon l'une quelconque des revendications 1 et 2, caractérisée par le fait qu'elle comprend de plus un ensemble rotulant (14) supportant la barrette (12) déformable et définissant deux axes d'articulation (XX',YY') dont un point d'intersection (O) est situé sur un axe du transducteur central, à proximité de la surface de la pièce sur laquelle les patins (22,24) sont en appui.

4. Tête de contrôle selon la revendication 3, caractérisée par le fait que, la barrette (12) pouvant être déformée entre une courbure au repos et une courbure de déformation maximale, le point d'intersection (O) des axes d'articulation est situé approximativement au milieu d'un segment formé par les intersections de l'axe du transducteur central avec la surface d'une pièce sur laquelle ces patins sont en appui, respectivement pour ladite courbure au repos et ladite courbure de déformation maximale de la barrette.

5. Tête de contrôle selon l'une quelconque des revendications 3 et 4, caractérisée par le fait que l'ensemble rotulant (14) comprend un support (26) apte à être monté sur un porteur (16), une pièce intermédiaire (28) et un cadre (30) sur lequel est monté la barrette (12), la pièce intermédiaire étant en contact avec le support et avec le cadre par des surfaces de révolution complémentaires (26a,28a;28c,30c) centrées sur lesdits axes d'articulation.

6. Tête de contrôle selon l'une quelconque des revendications 3 à 5, caractérisée par le fait que la barrette (12) est montée sur l'ensemble rotulant (14) par ses deux extrémités, au moyen de deux axes (34) parallèles à l'un (YY') des axes d'articulation.

7. Tête de contrôle selon les revendications 5 et 6 combinées, caractérisée par le fait que les patins de contact comprennent deux patins d'extrémité (22) en forme de U montés sur chaque extrémité de la barrette (12) et deux patins latéraux (24) à section en forme de secteur circulaire montés au centre de chaque côté de la barrette, de façon à pouvoir coulisser selon un axe parallèle à l'axe du transducteur central dans des rainures (30a) à section en arc de cercle formées dans ledit cadre.

8. Tête de contrôle selon l'une quelconque des revendications précédentes, caractérisée par le fait que les transducteurs (18) sont montés dans la barrette (12) de façon à émettre des faisceaux ultrasonores tangents les uns aux autres.

9. Tête de contrôle selon la revendication 8, caractérisée par le fait que les transducteurs (18) présentent des faces latérales adjacentes planes (18a).

10. Tête de contrôle selon l'une quelconque des revendications précédentes, caractérisée par le fait que les patins de contact (22,24) sont interchangeables.

11. Tête de contrôle selon l'une quelconque des revendications précédentes, caractérisée par le fait que chacun des transducteurs amovibles (118) est monté sur la barrette (112) par des moyens de fixation démontables (152, 160).

12. Tête de contrôle selon la revendication 11, caractérisée par le fait que les moyens de fixation démontables comprennent des organes de clavetage (152) traversant la barrette (112) et dont les extrémités pénètrent dans des trous (158) formés dans des faces latérales d'un boîtier d'enrobage (150) de chacun des transducteurs (118).

13. Tête de contrôle selon la revendication 12, caractérisée par le fait que le boîtier d'enrobage (150) est un boîtier parallélépipédique étanche qui enrobe la majeure partie du transducteur, à l'exception de l'extrémité de ce dernier faisant face à la surface de la pièce, les trous (158) étant formés dans le boîtier d'enrobage, à proximité de cette extrémité du transducteur.

14. Tête de contrôle selon l'une quelconque des revendications 12 et 13, caractérisée par le fait que les organes de clavetage sont des vis (152).

15. Tête de contrôle selon l'une quelconque des revendications 12 à 14, caractérisée par le fait que, chaque dent comprenant deux bras (142a, 142b) entre lesquels est logé l'un des transducteurs (118), les moyens de fixation démontables comprennent de plus un organe de liaison (160) reliant les extrémités des deux bras de chaque dent opposées à la branche de liaison (140).

16. Tête de contrôle selon la revendication 15, caractérisée par le fait que chaque organe de liaison est constitué par une pince (160) en fil métallique entourant lesdites extremités des deux bras de chaque dent, ces extrémités ayant la forme de crochets (162a, 162b).

17. Tête de contrôle selon la revendication 16, caractérisée par le fait que chaque extrémité en forme de crochet présente une encoche (164a, 164b) dans laquelle un conducteur électrique (120) sortant du transducteur correspondant est normalement maintenu par ladite pince (160) en fil métallique.

18. Procédé de contrôle par ultrasons de pièces dont le galbe évolue en cours de fabrication, à partir d'un état initial approximativement plan, caractérisé par le fait qu'il consiste à :
- tracer sur la pièce, lorsqu'elle est dans son état initial, des points à contrôler répartis selon un maillage prédéterminé ; et
- contrôler la pièce dans son état initial au moins une autre fois en cours de fabrication, au moyen d'une tête de contrôle ultrasonore unique réalisée selon l'une quelconque des revendications précédentes, en alignant les axes des transducteurs de la tête de contrôle avec les points à contrôler.

## Claims

1. Head for the ultrasonic control of parts having a random shape incorporating a deformable small bar (12) made from an elastic material and supporting a series of ultrasonic transducers (18) having coplanar axes and functioning by reflection, characterized in that contact blocks (22,24) distributed along the bar can be made to simultaneously bear on a surface of the part to be controlled, in such a way that the axes of all the transducers are approximately perpendicular to said surface and intersect the latter at points separated by approximately constant distances independently of the shape of the part and in that the deformable bar (12) is approximately shaped like a comb having a variable curvature connecting branch and which can be turned towards the part and teeth remaining approximately perpendicular to the connecting branch and in which are located each of the transducers (18).

2. Control head according to claim 1, characterized in that it comprises means (36) for returning the deformable small bar (12) to its rest position.

3. Control head according to either of the claims 1 and 2, characterized in that it also comprises a swivelling assembly (14) supporting the deformable small bar (12) and defining two articulation axes (XX',YY'), whose intersection point (O) is located on an axis of the central transducer in the vicinity of the surface of the part on which the blocks (22,24) bear.

4. Control head according to claim 3, characterized in that with the small bar (12) being deformable between a rest curvature and a maximum deformation curvature, the intersection point (O) of the articulation axes is located approximately in the centre of a segment formed by the intersections of the axis of the central transducer with the surface of a part on which said blocks bear, respectively for said curvature in the rest position and said maximum deformation curvature of the bar.

5. Control head according to either of the claims 3 and 4, characterized in that the swivelling assembly (14) comprises a support (26) which can be mounted on a carrier (16), an intermediate part (28) and a frame (30) on which is mounted the small bar (12), the intermediate part being in contact with the support and with the frame by complementary revolution surfaces (26a,28a;28c,30c) centered on said articulation axes.

6. Control head according to any one of the claims 3 to 5, characterized in that the small bar (12) is mounted on the swivelling assembly (14) by its two ends using two spindles (34) parallel to one (YY') of the articulation axes.

7. Control head according to claims 5 and 6 in combination, characterized in that the control blocks incorporate two U-shaped end blocks (22) mounted on each end of the small bar (12) and two circular sector-shaped lateral blocks (24) mounted in the centre of each side of the bar, so as to be able to slide along an axis parallel to the axis of the central transducer in circular arc section grooves (30a) formed in said frame.

8. Control head according to any one of the preceding claims, characterized in that the transducers (18) are mounted in the small bar (12) so as to be able to emit ultrasonic beams tangential to one another.

9. Control head according to claim 8, characterized in that the transducers (18) have adjacent, planar lateral faces (18a).

10. Control head according to any one of the preceding claims, characterized in that the contact blocks (22,24) are interchangeable.

11. Control head according to any one of the preceding claims, characterized in that each of the detachable transducers (118) is mounted on the small bar (112) by dismantlable fixing means (152,160).

12. Control head according to claim 11, characterized in that the dismantlable fixing means incorporate wedging members (152) traversing the small bar (112) and whose ends penetrate holes (158) formed in the lateral faces of a protective box (150) for each of the transducers (118).

13. Control head according to claim 12, characterized in that the protective box (150) is a tight parallelepipedic box protecting most of the transducer, with the exception of its end facing the surface of the part, the holes (158) being formed in the protective box in the vicinity of said transducer end.

14. Control head according to either of the claims 12 and 13, characterized in that the wedging members are screws (152).

15. Control head according to any one of the claims 12 to 14, characterized in that, as each tooth as two arms (142a,142b) between which is located one of the transducers (118), the dismantlable fixing means also incorporate a connecting member (160) connecting the ends of the two arms of each tooth opposite to the connecting branch (140).

16. Control head according to claim 15, characterized in that each connecting member is constituted by a metal wire clip (160) surrounding said ends of the two arms of each tooth, said ends being shaped like hooks (162a,162b).

17. Control head according to claim 16, characterized in that each hook-shaped end has a notch (164a,164b) in which an electrical conductor (120) passing out of the transducer corresponding thereto is normally held by said metal wire clip (160).

18. Process for the ultrasonic control of parts, whose shape evolves during manufacture, from an approximately planar initial state, characterized in that it consists of marking on the part, when it is in its initial state, points to be controlled distributed in accordance with a predetermined mesh system
and
controlling the part in its initial state at least one further time during manufacture by means of a single ultrasonic control head produced in accordance with any one of the preceding claims, by aligning the axes of the transducers of the control head with the points to be controlled.

## Patentansprüche

1. Ultraschallüberwachungsfühler für Werkstücke jeder Form mit einer verformbaren Leiste (12) aus einem elastischen Material, die eine Reihe von Ultraschall-Wandlern (18) mit koplanaren Achsen trägt und durch Reflexion funktioniert, **dadurch gekennzeichnet, daß** entlang der Leiste verteilte Kontaktschuhe (22,24) gleichzeitig in Anlage auf eine Fläche des zu überwachenden Werkstücks geführt werden können, so daß die Achsen aller Wandler annähernd senkrecht zu dieser Fläche stehen und letztere in durch annähernd konstante Abstände getrennte Punkten schneiden, unabhängig von den Konturen des Werkstücks, und daß die verformbare Leiste (12) in etwa die Form eines Kamms hat, mit einem Verbindungszweig von veränderlicher Krümmung, der zu dem Werkstück gedreht werden kann, und Zähnen, die annähernd senkrecht zum Verbindungszweig bleiben und in denen alle Wandler (18) angeordnet sind.

2. Überwachungsfühler nach Anspruch 1, **dadurch gekennzeichnet, daß** er eine Rückstelleinrichtung (36) für die verformbare Leiste (12) in ihre Ruheposition aufweist.

3. Überwachungsfühler nach einem der Ansprüche 1 und 2, **dadurch gekennzeichnet, daß** sie außerdem ein Drehgelenksystem (14) aufweist, das die verformbare Leiste (12) trägt und zwei Drehachsen (XX', YY') definiert, von denen ein Schnittpunkt (0) auf einer Achse des mittleren Wandlers in der Nähe der Fläche des Werkstücks liegt, auf dem die Schuhe (22,24) in Anlage sind.

4. Überwachungsfühler nach Anspruch 3, **dadurch gekennzeichnet, daß** die Leiste (12) zwischen einer Ruhekrümmung und einer Maximalverformungs-Krümmung verformt werden kann, wobei der Schnittpunkt (0) der Drehachsen annähernd in der Mitte eines Abschnitts liegt, der von den Kreuzungen der Achse des mittleren Wandlers mit der Fläche eines Werkstücks, auf dem diese Schuhe in Anlage sind, gebildet wird, jeweils für die Ruhekrümmung und die Maximalverformungs-Krümmung der Leiste.

5. Überwachungsfühler nach einem der Ansprüche 3 und 4, **dadurch gekennzeichnet,** **daß** das Drehgelenksystem (14) ein Gestell (26) aufweist, das auf einem Träger (16) angebracht werden kann, ein Zwischenteil (28) und einen Rahmen (30), auf dem die Leiste (12) angebracht ist, wobei das Zwischenteil mit dem Gestell und dem Rahmen über komplementäre Drehungsflächen (26a,28a; 28c,30c) in Kontakt ist, die bezüglich den Drehachsen zentrisch sind.

6. Überwachungsfühler nach einem der Ansprüche 3 bis 5, **dadurch gekennzeichnet, daß** die Leiste (12) durch ihre beiden Enden mittels zweier zu einer (YY') der Drehachsen parallelen Achsen (34) auf dem Drehgelenksystem (14) angebracht ist.

7. Überwachungsfühler nach den Ansprüchen 5 und 6 in Kombination, **dadurch gekennzeichnet, daß** die Kontaktschuhe zwei an jedem Ende der Leiste (12) montierte U-förmige Endschuhe (22) und zwei in der Mitte jeder Seite der Leiste angebrachte seitliche Schuhe (24) mit kreissektorförmigem Querschnitt umfassen, so daß sie entlang einer zur Achse des mittleren Wandlers parallelen Achse in im Rahmen gebildeten Nuten (30a) mit kreisbogenförmigem Querschnitt gleiten können.

8. Überwachungsfühler nach einem der vorhergehenden Ansprüche, **dadurch gekennzeichnet,** **daß** die Wandler (18) in der Leiste (12) so angebracht sind, daß sie zueinander tangentiale Ultraschallstrahlen aussenden.

9. Überwachungsfühler nach Anspruch 8, **dadurch gekennzeichnet, daß** die Wandler (18) aneinandergrenzende ebene Seitenflächen (18a) aufweisen.

10. Überwachungsfühler nach einem der vorhergehenden Ansprüche, **dadurch gekennzeichnet,** **daß** die Kontaktschuhe (22,24) auswechselbar sind.

11. Überwachungsfühler nach einem der vorhergehenden Ansprüche, **dadurch gekennzeichnet, daß** jeder der lösbaren Wandler (118) auf der Leiste (112) durch eine abnehmbare Befestigungseinrichtung (152,160) angebracht ist.

12. Überwachungsfühler nach Anspruch 11, **dadurch gekennzeichnet, daß** die abnehmbare Befestigungseinrichtung Keilverbindungselemente (152) aufweist, die die Leiste (112) durchlaufen, und deren Enden in Löcher (158) eindringen, die in den Seitenflächen eines Mantelgehäuses (150) eines jeden Wandlers (118) gebildet sind.

13. Überwachungsfühler nach Anspruch 12, **dadurch gekennzeichnet, daß** das Mantelgehäuse (150) ein dichtes parallelepipedisches Gehäuse ist, das den Großteil des Wandlers umgibt, außer dessen Ende, das der Oberfläche des werkstücks gegenüberliegt, wobei die Löcher (158) in dem Mantelgehäuse nahe diesem Ende des Wandlers gebildet sind.

14. Überwachungsfühler nach einem der Ansprüche 12 und 13, **dadurch gekennzeichnet, daß** die Keilverbindungselemente Schrauben (152) sind.

15. Überwachungsfühler nach einem der Ansprüche 12 bis 14, **dadurch gekennzeichnet, daß** jeder Zahn zwei Arme (142a, 142b) aufweist, zwischen denen einer der Wandler (118) angeordnet ist, und die abnehmbare Befestigungseinrichtung außerdem ein Verbindungselement (160) aufweist, das die dem Verbindungszweig (140) gegenüberliegenden Enden der beiden Arme jedes Zahns verbindet.

16. Überwachungsfühler nach Anspruch 15, **dadurch gekennzeichnet, daß** jedes Verbindungselement aus einer Klemme (160) aus Metalldraht besteht, die die Enden der beiden Arme jedes Zahnes umgibt, wobei diese Enden die Form von Haken (162a,162b) aufweisen.

17. Überwachungsfühler nach Anspruch 16, **dadurch gekennzeichnet, daß** jedes Ende in Form eines Hakens eine Kerbe (164a,164b) aufweist, in der ein vom entsprechenden Wandler ausgehender elektrischer Leiter (120) normalerweise durch die Klemme (160) aus Metalldraht gehalten wird.

18. Verfahren zur Ultraschallüberwachung von Werkstücken, deren Konturen sich während der Fabrikation von einem annähernd ebenen Anfangszustand ausgehend verändern, **dadurch gekennzeichnet, daß** es daraus besteht,
- auf dem Werkstück, wenn es in seinem Anfangszustand ist, nach einer vorgegebenen Netzstruktur verteilte zu überwachende Punkte zu skizzieren und
- das Werkstück in seinem Anfangszustand zumindest ein weiteres Mal während der Herstellung mittels eines einzigen nach einem der vorhergehenden Ansprüche hergestellten Ultraschallüberwachungsfühlers zu überwachen , indem man die Achsen der Wandler des Überwachungsfühlers mit den zu überwachenden Punkten ausrichtet.
